# EUROPEAN PATENT APPLICATION

(11) **EP 3 878 276 A1**
(43) Date of publication of application: **15.09.2021**
(21) Application number: 19882940.0
(22) Date of filing: 04.11.2019
(51) Int. Cl.: A01M 1/02, A01M 1/24, A01K 47/02, A01M 1/10

(54) **WASP CATCHING DEVICE PROVIDED ON BEEHIVE**

(30) Priority: 05.11.2018 KR 20180134497; 24.09.2019 KR 20190117272
(71) Applicant: Song, Man Ho, Busan 46076 (KR)
(72) Inventor: Song, Man Ho, Busan 46076 (KR)
(74) Representative: M. Zardi & Co S.A.
(86) International application number: PCT/KR2019/014873
(87) International publication number: WO 2020/096313

(57) **Abstract**

A wasp catching device installed on a beehive according to an embodiment of the present invention includes a capture chamber installed above the bee entrance of the beehive, formed of a mesh through which light is transmitted or a transparent or translucent material, and configured to capture wasps, and a capture chamber entrance located in the lower portion of the capture chamber, and formed to attract wasps by light entering the inside of the capture chamber. A flight space for the free flight of wasps and bees is provided below the capture chamber entrance by spacing the capture chamber apart from the ground by a predetermined distance. The wasp catching device allows wasps having the habit of flying upward to fly upward and be attracted to the capture chamber entrance by means of light emitted from the inside of the capture chamber while flying in the flight space.

## Description

### Technical Field

The present invention relates to a wasp catching device, and more particularly to a wasp catching device that is installed on a beehive.

### Background Art

Conventional wasp catching devices have a structure in which an attractant is placed in a capture frame and wasps are attracted and captured using the attractant. For example, Korean Utility Model Registration No. 20-066750 describes a wasp catching device in which an attractant is provided inside a catching net. Korean Utility Model Registration No. 20-0480937 describes a wasp catching device that is provided with a cone-shaped guide net having a top and a bottom that are open to guide wasps.

The problem of the conventional method is that it is a method of attracting wasps into the capture frame by attracting the wasps using the attractant, and thus there are only a few wasps that enter the capture frame, so that thus there is no effectiveness. In addition, the conventional wasp catching device is disposed in the state in which wasps can freely hunt bees in a surrounding beehive, leading to serious damage to beekeeping. Only a small number of wasps are captured by using conventional methods such as the method of capturing wasps by attracting the wasps using an attractant or the method of applying an attractant to an adhesive and fixing wasps when they sit on the adhesive. Therefore, most wasps can easily hunt bees in a beehive and obtain feeds.

Just from the fact that the number of wasps increases day by day and the damage to beekeeping is increasing every year, it can be seen that the conventional art method using an attractant does not prevent an increase in the number of wasps. Even arguments for the uselessness of the attractant method have emerged. The attractant used in the conventional art has a problem of dysfunction, such as a beehive being devastated by bringing in wasps from a long distance into the beehive. In addition, the scent of the attractant disappears over time, so that it cannot function as an attractant and it causes the inconvenience and economic burden of the frequent replacement of an attractant.

The reason why the catch rate is very low in the conventional art method of catching wasps by putting an attractant in the capture frame and attracting wasps with the attractant is that the wasps are in a state where they can freely hunt bees in a beehive. Since there are a lot of bees that become feeds for wasps in a beehive and wasps can easily hunt bees, the number of wasps that are attracted by the attractant and enter the catching frame according to the conventional art is considerably small.

80% of the main feed sources of Asian hornet wasps are bees. Wasps can easily hunt bees at any time in surrounding beehives, so that they catch bees for breeding and feed them to the larvae of the wasps, resulting in a rapid increase in wasps. Wasps easily obtain feeds for breeding from beekeeper farms and bees hunted by wasps are supplied as an energy source for the breeding of wasps, with the result that the number of wasps increases rapidly. This feed chain of wasps and bees leads to an increase in the number of wasps every year, so that the ecosystem is destroyed due to the loss of excessive bees, and the damage to beekeeper farms is seriously expanded every year. Accordingly, efforts are underway to designate Asian hornet wasps as an ecosystem disturbing species by the law.

As described above, it is impossible to reduce the number of wasps breeding and increasing at a rapid rate due to a small catch rate in the conventional method of attracting and catching wasps with a catching frame containing an attractant. However, wasps, which hunt bees and nurture larvae by feeding the hunted bees to the larvae, are major individuals in the breeding cycle, so that the damage to beekeeper farms cannot be resolved without capturing these major individuals.

### Disclosure

### Technical Problem

The present invention has been proposed to overcome the above-described technical problems, and an object of the present invention is to provide a wasp catching device that prevents the loss of enormous bee populations that disappear as feeds for wasps and disrupts the breeding cycle of wasps that threatens the ecosystem, thereby blocking an increase in wasp populations.

### Technical Solution

A wasp catching device installed on a beehive according to an embodiment of the present invention includes a capture chamber installed above the bee entrance of the beehive, formed of a mesh through which light is transmitted or a transparent or translucent material, and configured to capture wasps, and a capture chamber entrance located in the lower portion of the capture chamber, and formed to attract wasps by means of light entering the inside of the capture chamber. A flight space for the free flight of wasps and bees is provided below the capture chamber entrance by spacing the capture chamber apart from the ground by a predetermined distance. The wasp catching device allows wasps having the habit of flying upward to fly upward and be attracted to the capture chamber entrance by means of light emitted from the inside of the capture chamber while flying in the flight space.

As an embodiment, the wasp catching device further includes an entry guide part formed below the capture chamber entrance and configured to induce wasps to enter the capture chamber entrance and prevent the wasps from flying downward and then escaping while entering the capture chamber entrance.

As an embodiment, the floor of the capture chamber may be formed as a V-shaped floor, an inverted V-shaped floor, a four-sided inclined floor, or a flat floor. The capture chamber entrance may be located in a side or center of the V-shaped floor, the inverted V-shaped floor, the four-sided inclined floor, or the flat floor.

As an embodiment, the floor of the capture chamber may be separated from the capture chamber through a slot to remove the carcasses of wasps in the capture chamber. The top of the capture chamber may include a lid portion configured to remove the carcasses of wasps in the capture chamber. The top of the capture chamber may further include a collection container connected through a collection container entrance, the collection container entrance may provide the movement path of wasps, captured in the capture chamber, to the collection container, and the collection container may include a collection container lid configured to seal the collection container entrance of the collection container when the collection container is separated from the capture chamber.

As an embodiment, the capture chamber may include a front frame, a left-side frame, a right-side frame, and a rear frame, and the individual frames may be formed of a mesh through which light is transmitted or a transparent or translucent material. The frames may be folded to each other through hinges. The wasp catching device may further include a bee access adjustment part installed at the lower end of the rear frame and configured to adjust the size of the bee entrance.

### Advantageous Effects

In the present invention, wasps flying to a beehive are captured in a search flight stage, so that wasps are captured in a large number, thereby reducing the damage to beekeeper farmhouses caused by wasps. The present invention is directed to a structure that is installed above the bee entrance of a beehive where wasps hunt bees, so that the supply of energy sources to larvae by wasps are blocked and the number of wasps is reduced by capturing major wasp breeding individuals that hunt bees and feed the hunted bees to larvae, thereby disrupting a wasp breeding cycle.

In the present invention, all wasps flying to a beekeeping farm are captured in a search flight stage, so that the loss of the number of bee individuals is prevented in the beekeeping farm, thereby increasing the production of honey. The present invention is configured to capture a large number of wasps that reduce bee populations, thereby restoring a number of beneficial roles that bees play in the ecosystem.

In the present invention, bees may be safely protected by the bee access adjustment part at the entrance of the beehive. Since the present invention does not use an attractant, wasps may be captured in large quantities without the inconvenience of having to regularly exchange an attractant or the economic burden of purchasing an attractant. The present invention is easy to install and easy to clean the inside thereof.

### Description of Drawings

FIG. 1 is a diagram schematically showing the configuration of a wasp catching device according to an embodiment of the present invention;
FIG. 2 is a diagram illustrating the configuration of the capture chamber floor of the wasp catching device shown in FIG. 1;
FIG. 3 is a diagram illustrating a state in which a wasp catching device including a V-shaped capture chamber floor shown in FIG. 2 is installed on a beehive;
FIGS. 4 and 5 are reference diagrams illustrating a principle or process in which wasps are captured in a wasp catching device including the V-shaped capture chamber floor shown in FIG. 2;
FIGS. 6 to 8 are diagrams showing the configurations of other embodiments of the capture chamber floor of the wasp catching device shown in FIG. 1;
FIGS. 9 to 11 are reference diagrams illustrating a principle or process in which wasps are captured in a wasp catching device including the flat capture chamber floor shown in FIG. 8;
FIG. 12 is a diagram showing the configuration of an example including a bottom portion formed of a plate material in addition to the front frame, left-side frame, and right-side frame of the wasp catching device shown in FIG. 1;
FIG. 13 is a diagram schematically showing the configuration of another embodiment of a wasp catching device according to the present invention;
FIGS. 14 and 15 are schematic diagrams showing the configuration of still another embodiment of a wasp catching device according to the present invention;
FIG. 16 is a diagram illustrating the configuration of still another embodiment of a wasp catching unit according to the present invention;
FIG. 17 is a diagram schematically showing the configuration of still another embodiment of a wasp catching device with which a collecting container is combined according to the present invention;
FIG. 18 is a diagram schematically showing the configuration of still another example of a wasp catching device according to the present invention;
FIGS. 19 and 20 are diagrams schematically showing the configuration of still another example of a wasp catching device according to the present invention;
FIGS. 21 and 22 are diagrams illustrating the configuration of still another embodiment of a wasp catching device according to the present invention;
FIG. 23 is a diagram illustrating the configuration of still another embodiment of a wasp catching device according to the present invention;
FIGS. 24 and 25 are sectional views illustrating a wasp catching device according to an embodiment of the present invention;
FIG. 26 is a perspective view illustrating the structure of the wasp catching device shown in FIG. 25 by way of example;
FIG. 27 is a sectional view illustrating a wasp catching device according to another embodiment of the present invention;
FIG. 28 is a perspective view showing a modified example of a wasp catching device according to an embodiment of the present invention;
FIGS. 29 and 30 are perspective views showing another modified example of a wasp catching device according to an embodiment of the present invention;
FIG. 31 is a perspective view showing still another modified example of a wasp catching device according to an embodiment of the present invention;
FIG. 32 is a table showing the results of wasp capture experiments with a wasp catching device according to an embodiment of the present invention; and
FIG. 33 is a table showing changes in the cumulative number of wasps captured attributable to the light of a wasp catching device according to an embodiment of the present invention.

### Best Mode

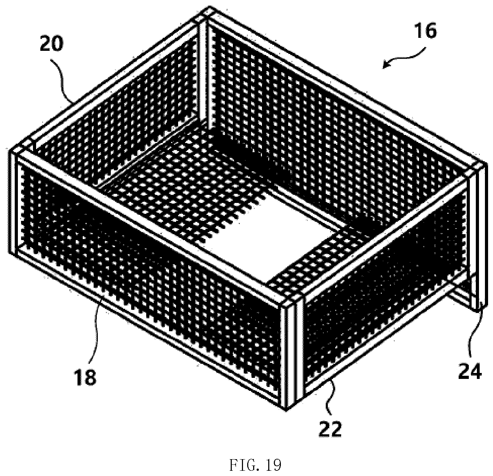

The drawing showing the best mode for practicing the present invention is FIG. 19.

### Mode for Invention

Embodiments of the present invention will be described clearly and in detail below to the extent that those having ordinary skill in the technical field of the present invention can easily practice the present invention.

In a wasp breeding cycle, bees are a main energy source. Wasps fly in front of the entrance of a beehive to hunt bees in the beehive of a beekeeper farmhouse. The present invention includes a characteristic structure for capturing wasps in the flight stage of the wasps. The present invention does not use an attractant to capture wasps, but captures wasps that fly to the entrance of a beehive to hunt bees and perform search flying.

Wasps are reproduced by catching bees, feeding the bees to larvae, and growing the larvae. Wasps, which have a breeding cycle using bees as feeds, are major breeding individuals in the increase of wasps. The present invention is intended to block this breeding cycle of wasps. The capture of major wasp breeding individuals is intended to block a growth energy source required for the growth of wasp larvae. The present invention may disrupt the breeding cycle of wasps in which the number of wasps is increased by catching bees and feeding them to larvae.

Accordingly, in order to carry out the technical process of catching the hunting individuals of wasps hunting bees, i.e., these major breeding individuals, it is necessary to understand the flying habit of the wasps hunting bees. The flying habits of wasps have the flight process of approaching the entrance of a beehive to catch bees and searching for suitable bees for hunting. This is called the search flight of wasps. The reason why wasps fly in front of the entrance of a beehive is that there are a lot of bees at the entrance of the beehive, which makes it the easiest spot for hunting.

The present invention has a structure and principle in which wasps are captured in the stage of searching and flying to hunt bees in front of the entrance of a beehive. The present invention includes meshes or plates that are perforated to a hole size that does not allow wasps to pass through holes in order to prevent captured wasps from escaping to the outside. In addition, it may also be possible to employ a mixture of a mesh and a plate because such constituent materials do not have a problem in achieving the object of the present invention. It is assumed that the drawings shown in the present invention are drawings including meshes for the sake of convenience.

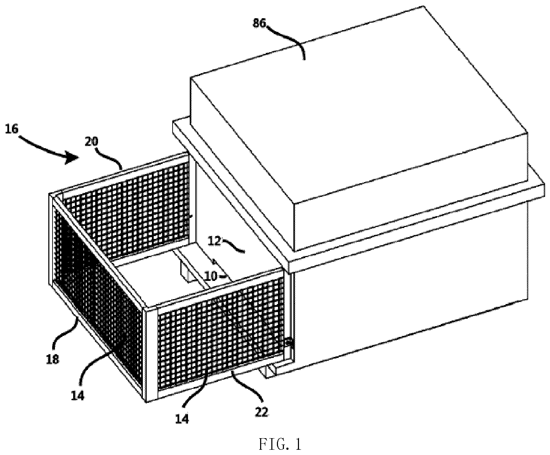

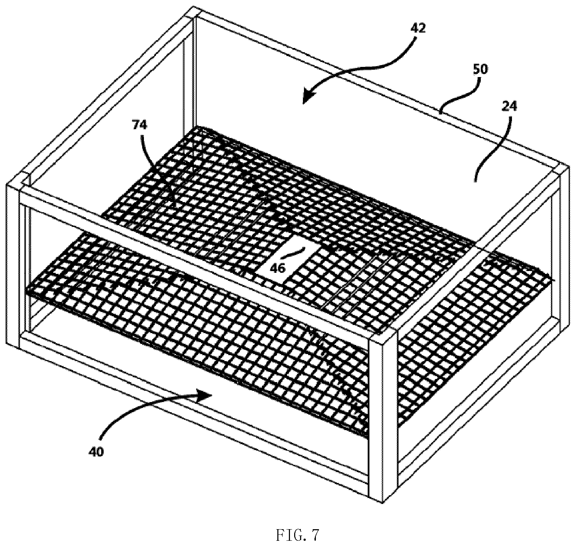

FIG. 1 is a diagram schematically showing the configuration of a wasp catching device according to an embodiment of the present invention. Referring to FIG. 1, a wasp catching device 16 may be installed on a beehive 86. The wasp catching device 16 may include a body having a front frame 18, a left-side frame 20, and a right-side frame 22. The frames of the wasp catching device 16 may be formed of meshes 14 or plates (see FIG. 7; 50) that are perforated to a hole size that prevents wasps from passing through holes. The meshes 14 are formed as nets of a certain size so that wasps cannot pass therethrough, and the size of the holes of the meshes may be about 5 to 6 mm in width and length.

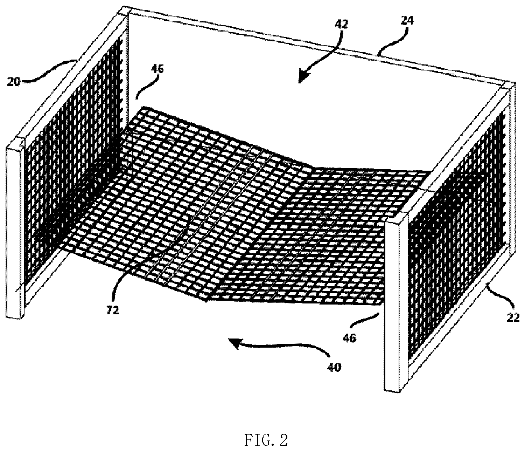

The main body of the wasp catching device 16 may be installed in the state of being spaced apart from the ground at a certain height so that wasps enter it while flying for search. The wasp catching device 16 may be installed in close contact with the front surface 12 of the beehive entrance 10 through which bees enter and exit. In this case, the lower part of the wasp catching device 16 is defined as a search flight chamber (see FIG. 2; 40), and the upper part thereof is defined as a capture chamber (see FIG. 2; 42). The wasp catching device 16 according to an embodiment of the present invention may form a capture chamber floor at the boundary between the lower search flight chamber 40 and the upper capture chamber 42.

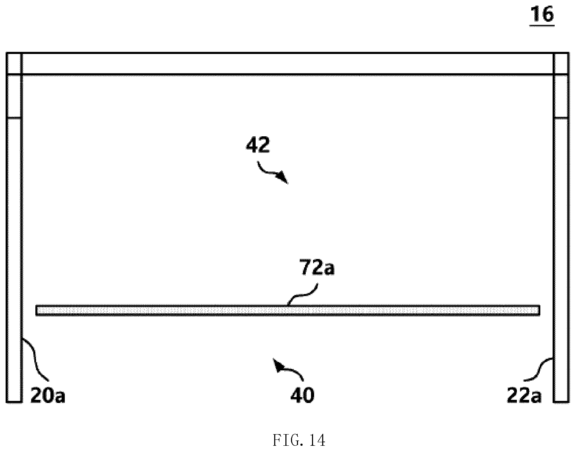

FIG. 2 is a diagram illustrating the configuration of the capture chamber floor of the wasp catching device shown in FIG. 1. Referring to FIG. 2, the capture chamber floor 72 may have a V shape. The V-shaped capture chamber floor 72 may be formed of a mesh (see FIG. 1; 14) or a plate (see FIG. 7; 50), and may have a V-type shape in which inclined surfaces on both sides are widened upward. The V-shaped capture chamber floor 72 may have capture chamber entrances 46 so that wasps can enter the capture chamber 42 while performing search flight in the search flight chamber 40.

The capture chamber entrances 46 may be formed in a shape in which they are spaced apart from the left and right sides of the V-shaped floor by predetermined intervals and are open to both left and right sides. Wasps can enter the inside of the capture chamber 42 through the capture chamber entrances 46 that are open on both sides of the V-shaped capture chamber the floor 72. The capture chamber 42 may be defined by a rear frame 24 formed of a mesh 14 or a plate 50 in addition to the front frame 18, the left-side frame 20, and the right-side frame 22 formed of the meshes 14 or plates 50 in order to prevent captured wasps from escaping to the outside.

The wasps captured in the capture chamber 42 cannot fly to a location below the capture chamber 42, nor can they go out to the entrance 46 of the capture chamber, due to their habit of flying upward. The wasps stay in the upper space inside the capture chamber 42. Even when the wasp sometimes descends to the floor of the capture chamber 42, it has a habit of jumping over a small space when crawling from the floor, so that it is difficult to come out through the capture chamber entrances 46 when it is captured in the capture chamber 42.

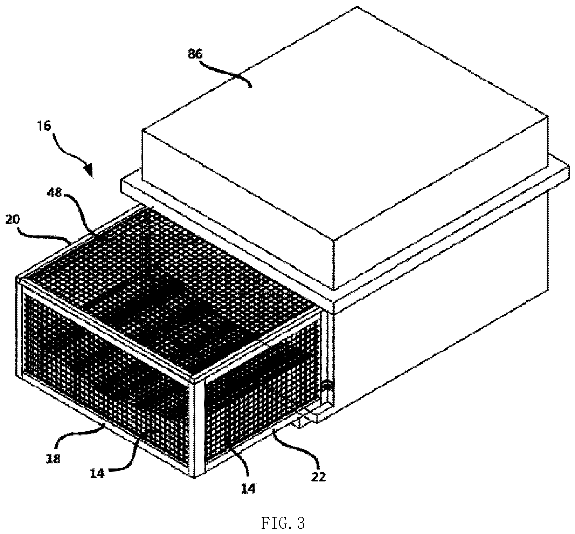

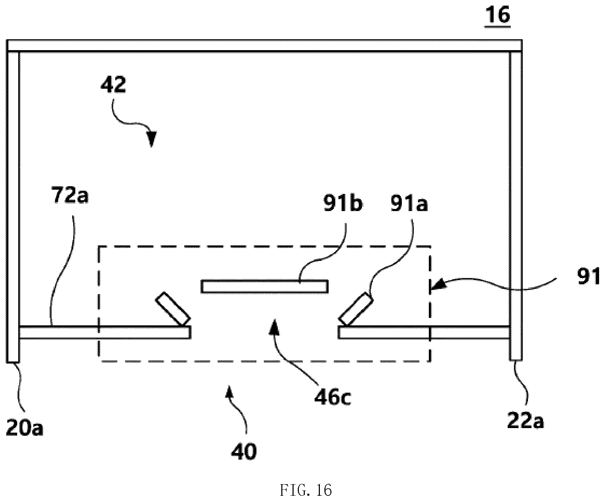

FIG. 3 is a diagram illustrating a state in which a wasp catching device including the V-shaped capture chamber floor shown in FIG. 2 is installed on a beehive. Referring to FIG. 3, in the wasp catching device (see FIG. 1; 16), a lid part 48 may be formed on the top of the capture chamber 42 so that dead wasps can be easily removed. The lid part 48 is configured to open and close the top of the capture chamber 42, and may be formed of a mesh 14 or a plate 50. The wasp catching device 16 may be fixed to the front side of the beehive 12 by a conventional fixing means such as a ring at both side ends or upper end thereof.

A process in which wasps are captured will now be described with reference to FIGS. 2 and 3. Wasps fly for search toward the beehive entrance 10 where bees gather in order to hunt bees. Wasps enter the search flight chamber 40, which is the lower space of the wasp catching device 16 spaced apart from the ground at a certain height, while performing search flight. Wasps enter the capture chamber 42 through the capture chamber entrances 46 while flying along the bottom surface of the V-shaped capture chamber floor 72. Through this process, wasps are captured. The present invention has a capturing principle using a habit in which wasps fly upward when there is an open space above.

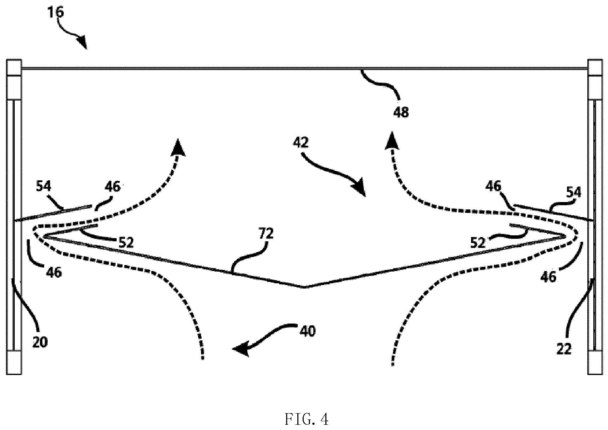

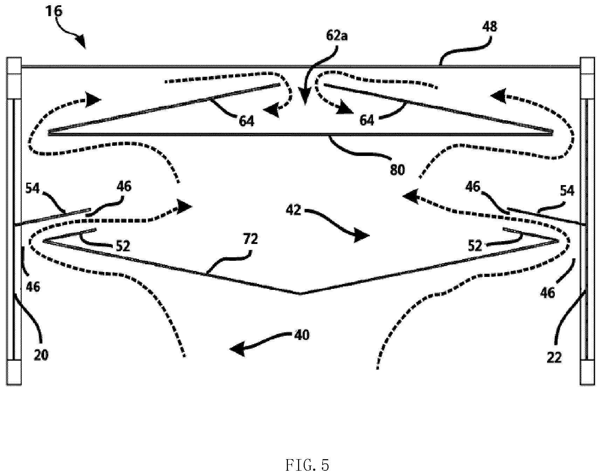

FIGS. 4 and 5 are reference diagrams illustrating a principle or process in which wasps are captured in a wasp catching device including the V-shaped capture chamber floor shown in FIG. 2. In FIGS. 4 and 5, the movement paths of warps are indicated by dotted lines.

Referring to FIG. 4, the wasp catching device 16 may include a protruding portion 52 and a roof plate 54 formed of a mesh 14 or a plate 50 in each of the capture chamber entrances 46. The protruding portions 52 may be formed at a predetermined height to have a predetermined slope along the edges of the capture chamber entrances 46 formed on both sides of the V-shaped capture chamber floor 72. The roof plates 54 may be formed by being spaced apart at a predetermined height above the capture chamber entrances 46 so that wasps pass through the capture chamber entrances 46 on both sides and enter from both side directions of the inside of the capture chamber 42.

Referring to FIG. 5, the wasp catching device 16 may further include an upper integrated capture chamber 62a formed of a mesh 14 or a plate 50 inside the capture chamber 42. As shown in FIG. 5, the wasps having come up from the search flight chamber 40 to the capture chamber 42 may enter the upper integrated capture chamber 62a through both sides of the upper part of the capture chamber 42. The upper integrated capture chamber 62a is defined by inclined portions 64 that are spaced from both left and right sides of the upper portion by predetermined intervals so that wasps can enter the upper integrated capture chamber 62a and are formed on both sides to a predetermined length to have a predetermined inclination.

The distance between the narrowed upper ends of the inclined portions 64 and the lid part 48 may be formed by being spaced apart by a distance through which wasps pass. An upper integrated capture chamber floor 80 connecting the two inclined portions 64 at lower ends of the inclined portions 64 may be formed. The wasps in the capture chamber 42 are captured in the upper integrated capture chamber 62a through the spaces spaced by the predetermined intervals on both sides of the upper part. The wasps enter the upper integrated capture chamber 62a through the space at the upper ends of the inclined portions 64 having an inclined structure narrowing forward due to their habit of moving upward, and are then confined in the upper integrated capture chamber 62a. Although the V-shaped capture chamber floors 72 are shown in FIGS. 2 to 5, the capture chamber floors may have various shapes other than the V shape according to embodiments of the present invention.

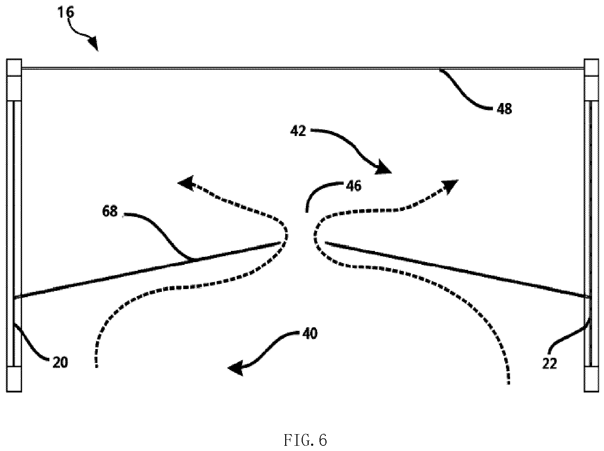

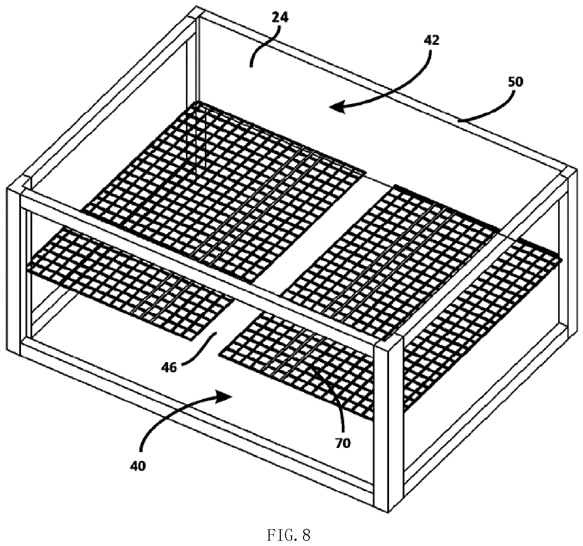

FIGS. 6 to 8 are diagrams showing the configurations of other embodiments of the capture chamber floor of the wasp catching device shown in FIG. 1. FIG. 6 shows an inverted V-shaped capture chamber floor (hereinafter referred to as the inverted V-shaped floor; 68), FIG. 7 shows a four-sided inclined capture chamber floor (hereinafter referred to as the four-sided inclined floor; 74), and FIG. 8 shows a flat capture chamber floor (hereinafter referred to as the flat floor; 70). Referring to FIG. 6, the inverted V-shaped floor 68 has a shape in which inclined surfaces on both sides are widened downward. Referring to FIG. 7, the four-sided inclined floor 74 has a shape in which four-sided inclined surfaces are widened downward. Referring to FIG. 8, the flat floor 70 is formed in the shape of a plane.

Each of the inverted V-shaped floor 68, the four-sided inclined floor 74, and the flat floor 70 formed at the lower ends of the capture chambers may have a capture chamber entrance 46 open to a predetermined size in the center of the bottom of the capture chamber. Wasps may enter the search flight chamber 40 spaced apart from the ground while performing search flight in front of the beehive entrance 10. After entering the search chamber 40, the wasps pass through the capture chamber entrance 46 located at the center of the bottom of the capture chamber and then enter the capture chamber 42 while flying along the surface of the floor by the habit of flying upward.

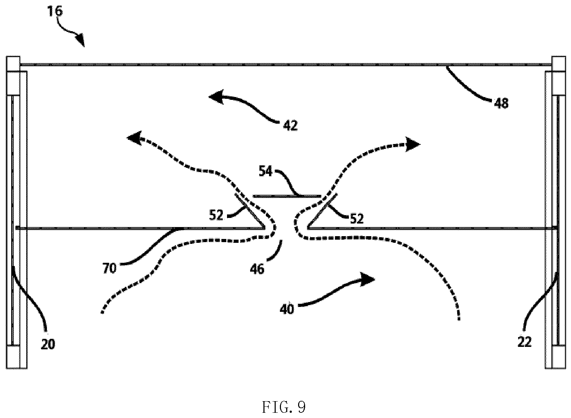

FIGS. 9 to 11 are reference diagrams illustrating a principle or process in which wasps are captured in a wasp catching device including the flat capture chamber floor shown in FIG. 8. In FIGS. 9 to 11, the movement paths of wasps are indicated by dotted lines.

Referring to FIG. 9, the wasp catching unit 16 may include a protruding portion 52 and a roof plate 54 at the entrance 46 of the capture chamber. The protruding portion 52 may be formed at a predetermined height to have a predetermined slope along the edge of the capture chamber entrance 46 formed in the center of the floor 70. The roof plate 54 may be formed by being spaced apart at a predetermined height above the capture chamber entrance 46 so that wasps pass through the capture chamber entrance 46 at the center and enter the inside of the capture chamber 42. The protruding portion 52 and the roof plate 54 formed at the entrance 46 of the capture chamber may indirectly block the entrance 46 of the capture chamber and serve as an obstacle to make it difficult for wasps to escape to the outside.

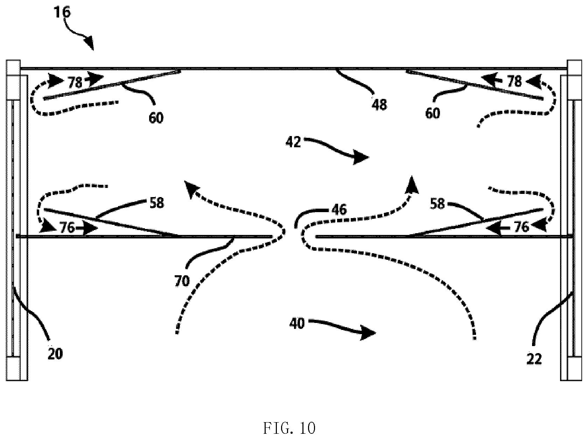

Referring to FIG. 10, the wasp catching device 16 may further include mini-capture chambers formed of a mesh 14 or a plate 50 on both sides of the upper or lower portion of the capture chamber 42. For example, the mini-capture chambers may be configured as lower mini-capture chambers 76 or upper mini-capture chambers 78.

The wasps having come up from the search flight chamber 40 to the capture chamber 42 may enter the lower mini-capture chambers 76 through both sides of the lower portion of the capture chamber 42. The lower mini-capture chambers 76 may include lower inclined portions 58 spaced apart from the left and right sides of the lower portion by predetermined intervals and having a predetermined slope so that wasps can enter the lower mini-capture chambers 76 from both sides of the lower portion of the capture chamber 42. The lower ends of the lower inclined portions 58 may be formed to come into close contact with the floor of the capture chamber 42. The lower mini-capture chamber 76 may be configured such that the lower inclined portions 58 are formed to have a predetermined length in order to form entry passages for wasps on both left and right sides of the lower portion of the capturing chamber 42.

In addition, wasps may enter the upper mini-capture chambers 78 through both sides of the upper portion of the capture chamber 42. The upper mini-capture chambers 78 may include upper inclined portions 60 spaced apart from the left and right sides of the upper portion by predetermined intervals and having a predetermined slope so that wasps can enter the upper mini-capture chambers 78 from both sides of the upper portion of the capture chamber 42. The upper ends of the upper inclined portions 58 may be formed to come into close contact with a lid part 48. The upper mini-capture chamber 78 may be configured such that the upper inclined portions 60 are formed to have a predetermined length in order to form entry passages for wasps on both left and right sides of the upper portion of the capturing chamber 42. The wasps in the capture chamber 42 enter and are captured in either the lower mini-capture chambers 76 or the upper mini-capture chambers 78 through spaces spaced apart by predetermined intervals on both sides.

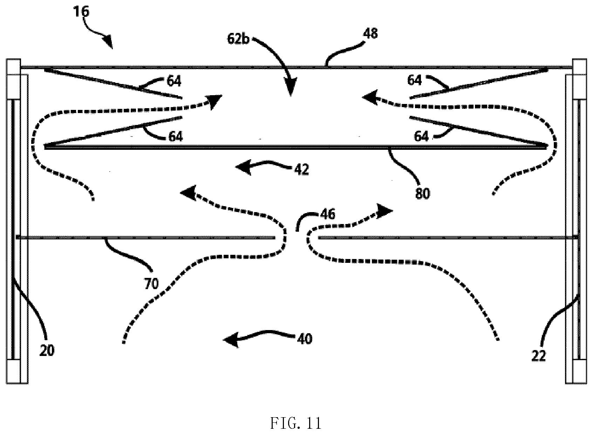

Referring to FIG. 11, a wasp catching device 16 may include an upper integrated capture chamber 62b formed of a mesh 14 or a plate 50 in a capture chamber 42. The upper integrated capture chamber 62b may include inclined portions 64 spaced apart from the left and right sides of the upper portion by predetermined intervals and having a predetermined slope so that wasps can enter the upper integrated capture chamber 62b from both sides of the upper portion of the capture chamber 42.

The inclined portions 64 may be formed to a predetermined length on both sides, one pair for the upper and lower portions of each side. Each pair of inclined portions 64 may have an inclined structure having a shape such as that of a fish trap whose front becomes narrower. The distance between the upper and lower ends of the inclined portions 64 configured to have a narrowing structure may be formed by being spaced apart at a distance through which wasps pass. The end of the upper inclined portion 64 of the pair of inclined portions 64 may come into close contact with the lid part 48. An upper integrated capture chamber floor 80 may be configured to connect both the lower inclined portions at the lower ends of the lower inclined portions 64.

The wasps in the capture chamber 42 enter the upper integrated capture chamber 62b through spaces spaced apart by predetermined intervals on both sides of the upper portion due to their habit of moving upward. In this case, wasps pass through spaces at both ends of the inclined portions 64 having an inclined structure whose front becomes narrower, and are captured in the upper integrated capture chamber 62b.

The wasp catching device 16 shown in FIG. 11 may include the lower mini-capture chamber 76 shown in FIG. 10. The lower mini-capture chamber 76 may be configured along with the upper integrated capture chamber 62b formed within the capture chamber 42. The stress of wasps increases as the space is narrowed, and then the stress reaches its peak, with the result that energy is rapidly exhausted. Due to this characteristic of wasps, the wasps having entered and captured in the upper integrated capture chamber 62b or the lower mini-capture chamber 76 die early.

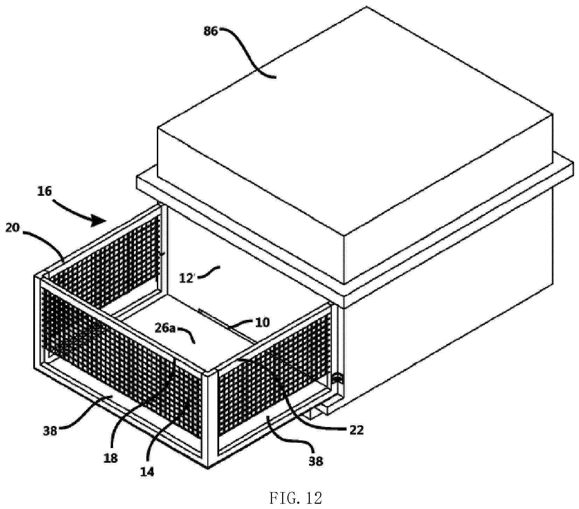

FIG. 12 is a diagram showing the configuration of an example including a bottom portion formed of a plate material in addition to the front frame, left-side frame, and right-side frame of the wasp catching device shown in FIG. 1. Referring to FIG. 12, the bottom portion 26a may be formed at the lower end of the wasp catching device 16. The bottom portion 26a may include a search flight chamber entrance 38 of a predetermined size under the front frame 18, the left-side frame 20, and the right-side frame 22 so that wasps can enter while performing search flight. The bottom portion 26a prevents a wasp from going out by blocking a lower space when the wasp enters the inside of the search flight chamber 40, and allows the wasp to fly upward and rapidly enter the capture chamber entrance 46.

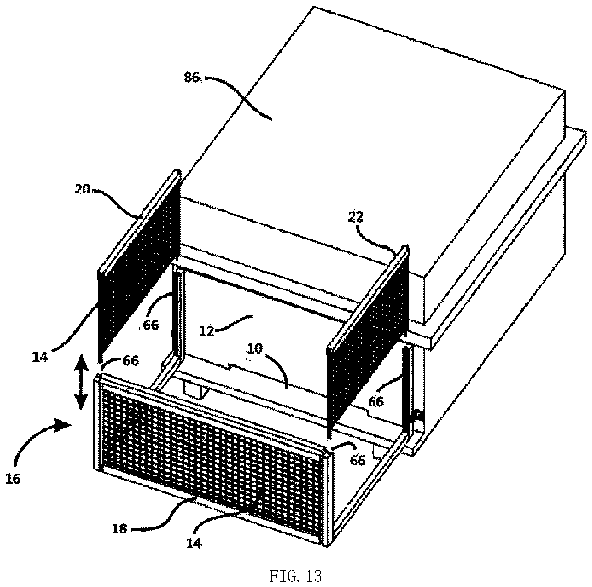

FIG. 13 is a diagram schematically showing the configuration of another embodiment of a wasp catching device according to the present invention. Referring to FIG. 13, the wasp catching device 16 is configured such that a left-side frame 20 and a right-side frame 22 may be selectively attached and detached. In addition, the wasp catching unit 16 may be configured such that grooves 66 are formed on both sides of the lower and upper inclined portions 58 and 60 of the mini-capture chambers 76 and 78 shown in FIG. 10 so that meshes 14 or plates 50 can be fitted into and be attached into or detected from the grooves.

The wasp catching device 16 is configured such that grooves 66 are formed on both sides of the inclined portions 64 of the upper integrated capture chambers 62a and 62b shown in FIG. 5 or 11 so that meshes 14 or plates 50 can be fitted into and be attached into or detected from the grooves. In this case, the grooves include perforated grooves such as grooves or slots formed to a predetermined depth. The meshes inserted into the grooves may be easily detached therefrom and thus this has the advantage of being easy to take out or clean the dead wasps inside the capture chamber 42 easily.

As described above, in the wasp catching unit 16 according to the embodiment of the present invention, the wasps flying to the beehive 86 are captured in the search flight stage, so that wasps can be captured in large quantities, thereby reducing the damage to beekeeper farms caused by wasps. The wasp catching device 16 is installed at the entrance of the beehive where wasps hunt bees, and captures main wasp breeding individuals, so that the supply of larval energy by wasps is cut off and the number of individual wasps can be reduced, thereby disrupting a wasp breeding cycle.

In addition, since the present invention does not use an attractant, wasps are captured in large quantities without the inconvenience of having to regularly exchange the attractant or the economic burden of purchasing the attractant. As a result of experiments on the wasp catching device 16 of the present invention and the conventional attractant-type catching frame under the same conditions, 85% of wasps were captured in the wasp catching device 16 of the present invention, and 15% of wasps were captured in the conventional attractant-type catching frame.

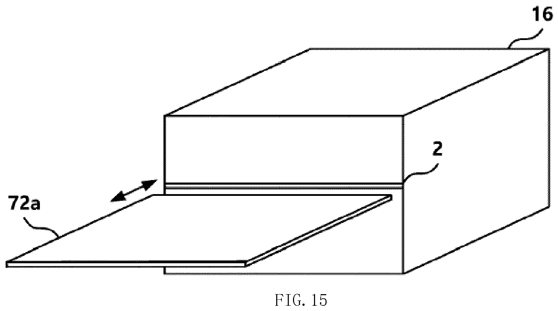

FIGS. 14 and 15 are schematic diagrams showing the configuration of still another embodiment of a wasp catching device according to the present invention. Referring to FIG. 14, the wasp catching device 16 may include a straight capture chamber floor 72a. For example, there may be included the straight capture chamber floor 72a that is spaced apart from a left-side frame 20a and a right-side frame 22a and a straight-line capture chamber floor 72a by a predetermined distance. In this case, the entrances of the capture chamber may be formed between the left-side frame 20a and the straight capture chamber floor 72a and between the right-side frame 22a and the straight capture chamber floor 72a.

In this case, the straight capture chamber floor 72a is merely an example, and the present invention may be modified into capture chamber floors of various shapes such as a V-shaped floor and an inverted V-shaped floor. Various components included in the wasp catching device 16 may be formed of a mesh or a plate, or may be formed of a transparent or translucent material having a high light transmittance, such as transparent acrylic, transparent plastic (polycarbonate), glass, or the like.

Since wasps have the habit of flying upward toward light, the amount of light (transmittance) transmitted into a search flight chamber directly affects the capture rate when wasps enter the search flight chamber in the catching device. In other words, as the light transmittance in the wasp catching device 16 increases, the wasp catching success rate may be improved. To this end, various components included in wasp catching device 16 or the wasp catching device 16 may be made of a material having a high light transmittance such as transparent acrylic, transparent plastic (polycarbonate), or glass, i.e., a transparent or translucent material.

Referring to FIG. 15, the carcasses of wasps that have died in the capture chamber 42 will be accumulated on the capture chamber floor 72a. In this case, light is blocked in the capture chamber floor 72a due to the carcasses of wasps, and such light blocking may reduce the wasp capture success rate. Accordingly, the capture chamber floor 72a of the wasp catching device 16 according to the present invention may be configured to be mounted or slid through a slot 2 formed in a wasp catching device body. In other words, the carcasses of wasps accumulated on the capture chamber floor 72a may be easily removed by pulling the capture chamber floor 72a through the slot 2. In an exemplary embodiment, the capture chamber floor 72a that is slid through the slot 2 or coupled to the device body may include at least one of the various types of capture chamber floors described with reference to FIGS. 1 to 14.

FIG. 16 is a diagram illustrating the configuration of still another embodiment of a wasp catching unit according to the present invention. Referring to FIG. 16, the wasp catching unit 16 may include straight capture chamber floors 72a and an entry guide part 91. The entry guide part 91 located in the center of the search flight chamber 40 may provide the role of helping or guiding wasps to enter a capture chamber entrance 46c formed between the two straight capture chamber floors 72a. The entry guide part 91 located in the center of the search flight chamber 40 may include a first entry guide portion 91a and second entry guide portions 91b. The first entry guide portions 91a may have a predetermined slope, and the second entry guide portion 91b may be formed to be flat over the first entry guide portions 91a. The first and second entry guide portions 91a and 91b may prevent wasps from escaping to the outside.

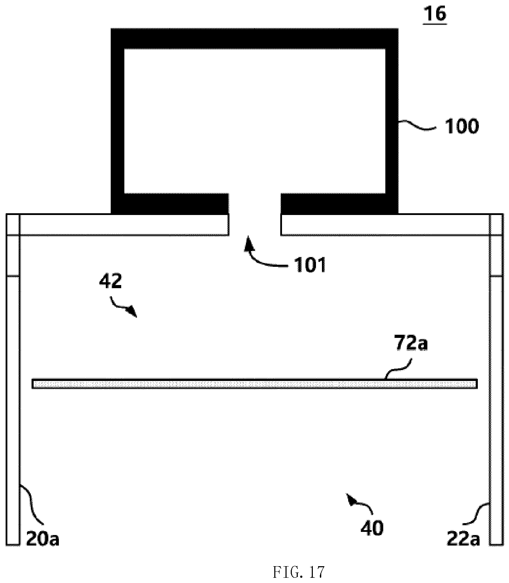

FIG. 17 is a diagram schematically showing the configuration of still another embodiment of a wasp catching device with which a collecting container is combined according to the present invention. Referring to FIG. 17, the wasp catching device 16 according to the present invention may include a straight capture chamber floor 72a. However, the scope of the present invention is not limited thereto, and the wasp catching device 16 may be implemented in the various types of structures described above.

A collection container 100 may be installed on the top of the wasp catching device 16. For example, a part of the top of a capture chamber 42 of the wasp catcher 16 and a part of the bottom of the collection container 100 may be connected to each other. In other words, a collection container entrance 101 may be formed between the capture chamber 42 and the collection container 100. As described above, since wasps have the habit of flying upward, they will move to the collection container through the collection container entrance 101. In this case, living wasps may be collected in the collection container 100.

Some industries (e.g., the medical industry) require living wasps. However, it can be very difficult to collect wasps and keep them alive or to collect wasps in large quantities because wasps die within hours due to stress in a small space as in a common trap. In order to keep the captured wasp alive, a large space is required to avoid stress. Accordingly, the collection container 100 combined with the wasp catching device 16 according to the present invention may provide a structure for supplying a large number of living wasps.

In an exemplary embodiment, although that the size of the collection container 100 is shown as being smaller than that of the wasp catching device 16 in the drawing, the scope of the present invention is not limited thereto. For example, the size of the collection container 100 may be larger than that of the wasp catching device 16. In addition, the collection container 100 may be easily separated from the wasp catching device 16, and the collection container entrance 101 of the separated collection container 100 may be sealed with a cover.

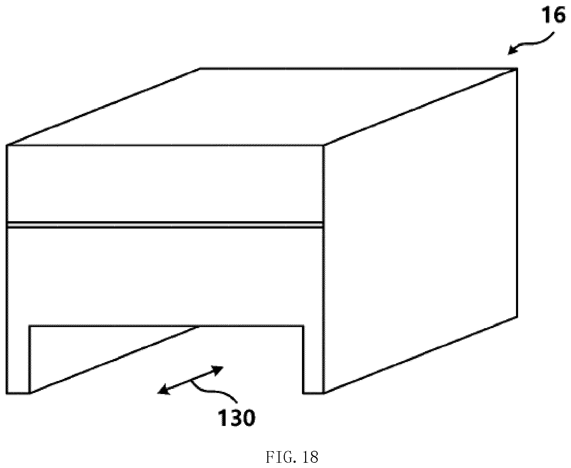

FIG. 18 is a diagram schematically showing the configuration of still another example of a wasp catching device according to the present invention. Referring to FIG. 18, a wasp catching device 16 may include a bee entrance 130. The bee entrance 130 may be formed by opening a part of the front part of the wasp catching device 16. Bees enter and exit a beehive entrance 10 through the bee entrance 130 provided in a form in which the part of the front part of the wasp catching device 16 is open, so that the bees can easily enter and exit the beehive entrance 10 without stress. In an exemplary embodiment, the bee entrance 130 may be formed in at least one of the front part, rear part, right-side part and left-side part of the wasp catching device 16.

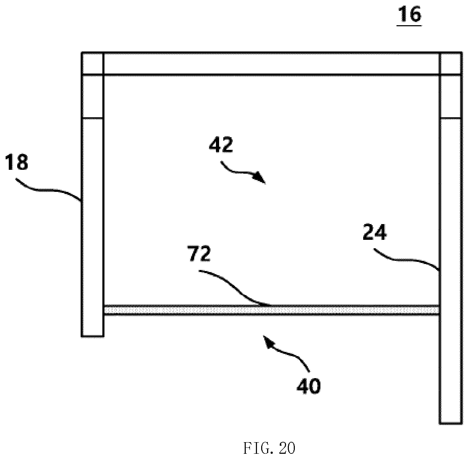

FIGS. 19 and 20 are diagrams schematically showing the configuration of still another example of a wasp catching device according to the present invention. Referring to FIGS. 19 and 20, a wasp catching device 16 may include a front frame 18, a rear frame 24, a left-side frame 20, and a right-side frame 22. Unlike in the previous embodiments, in the wasp catching device 16 shown in FIGS. 19 and 20, a search flight chamber 40 having some sealed surfaces may be omitted. For example, as shown in FIGS. 19 and 20, the height of the front frame 18, the left-side frame 20, and the right-side frame 22 may be lower than that of the rear frame 24. In other words, the front frame 18, the left-side frame 20, and the right-side frame 22 may be present only in a range from a top surface to a capture chamber floor 72. In this case, the three surfaces of the search flight chamber 40 are opened, so that wasps may more easily enter the search flight chamber 40 and bees may also easily enter the beehive entrance 10.

Although a structure in which the three surfaces of the search flight chamber 40 are opened is shown in the drawings of FIGS. 19 and 20, the scope of the present invention is not limited thereto. For example, a capture chamber floor included in the wasp catching device 16 in which the three surfaces of the search flight chamber 40 are open may be implemented in various shapes such as a straight shape, a V shape, an inverted V shape, and a plurality of straight shapes. In addition, the wasp catching device 16 having the three open surfaces of the search flight chamber 40 may further include the various components described with reference to FIGS. 1 to 18.

Meanwhile, the capture chamber 42 may include a bottom surface (the floor of the capture chamber) to capture and confine wasps. The capture chamber 42 may be made of a transparent or translucent material through which light is desirably transmitted in order to effectively attract wasps having the habit of being attracted according to the amount and direction of light entering the inside of the capture chamber from the outside and the habit of flying upward.

The wasp catching device 16 is designed to maximize the amount of light entering the capture chamber 42 from any angle. To minimize foreign body sensation or stress when bees and wasps are active near the capture chamber, a space below the bottom of the capture chamber may be set to an open flight space. In this case, the open flight space below the bottom of the capture chamber may provide a free movement and activity space for bees and wasps. Wasps may enter the capture chamber 42 through a capture chamber entrance located above according to the amount and direction of light while flying in the open flight space.

The bottom (floor) of the capture chamber may be configured such that the capture chamber entrance through which wasps may enter the capture chamber 42 is formed by spacing parts of the bottom apart from the left-/right-side frame and rear/front frame of the main body by a predetermined distance. Alternatively, an entrance through which wasps enter the capture chamber 42 is formed by forming an elongated hole (e.g., a long hole or a slit) in the capture chamber floor.

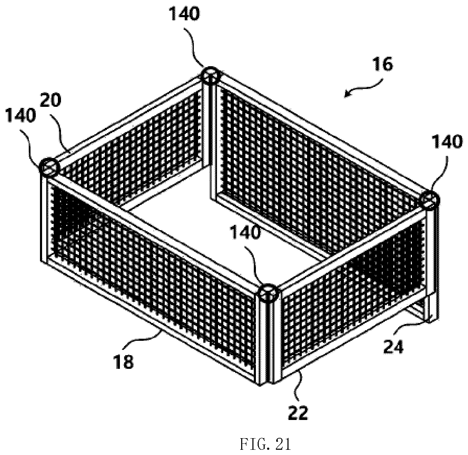

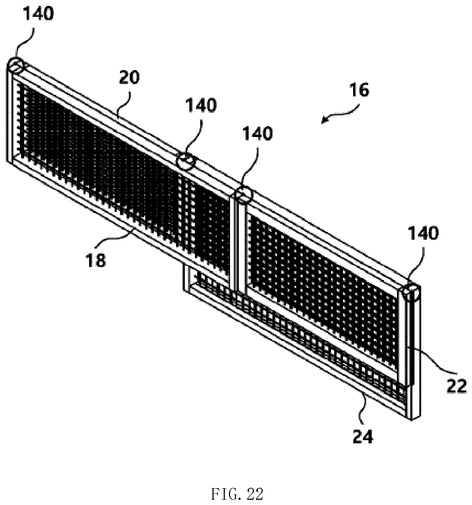

FIGS. 21 and 22 are diagrams illustrating the configuration of still another embodiment of a wasp catching device according to the present invention. Referring to FIGS. 21 and 22, a wasp catching device 16 may include a front frame 18, a left-side frame 20, a right-side frame 22, and a rear frame 24. The front frame 18, the left-side frame 20, the right-side frame 22, and the rear frame 24 may be connected to each other through hinges 140, and may be folded around the hinges. For example, the front frame 18 and the left-side frame 20 may be connected through the hinge 140, the front frame 18 and the right-side frame 22 may be connected to each other through the hinge 140, the right frame 22 and the rear frame 24 may be connected to each other through the hinge 140, and the left-side frame 20 and the rear frame 24 may be connected to each other through the hinge 140.

In this case, as shown in FIG. 22, the front frame 18 and the left-side frame 20 may be folded to face each other through the plurality of hinges 140, and the right-side frame 22 and the rear frame 24 may be folded to face each other. In this case, since the volume for the storage of the wasp catching device 16 is reduced, the storage of the wasp catching device 16 may be facilitated. In an exemplary embodiment, the hinges 140 may be implemented as various structures (e.g., cylindrical fixing members, etc.) that connect individual components and allow the components to be folded to each other.

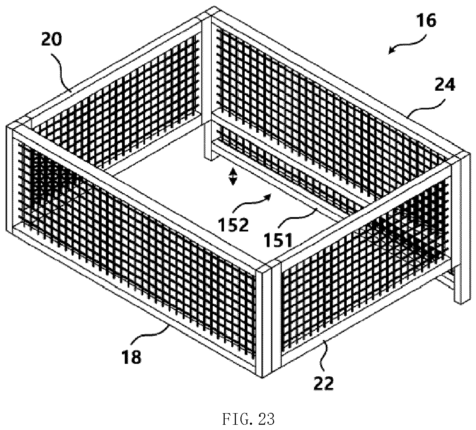

FIG. 23 is a diagram illustrating the configuration of still another embodiment of a wasp catching device according to the present invention. Referring to FIG. 23, the wasp catching device 16 may include a front frame 18, a left-side frame 20, a right-side frame 22, and a rear frame 24. A bee access adjustment part 151 configured to provide the function of preventing wasps from entering and allowing bees to enter and exit freely may be formed at the lower end of the rear frame 24. The bee access adjustment part 151 may be configured to adjust the size of a bee entrance 152 through which bees can enter. For example, the bee access adjustment part 151 may be moved up and down, and the size of the bee entrance 152 may be adjusted by adjusting the bee access adjustment part 151.

In an exemplary embodiment, the bee access adjustment part 151 may provide the function of smoothly increasing the size of the bee entrance without dropping pollen when bees enter the beehive while holding the pollen. The bee access adjustment part 151 may be fastened or coupled to the rear frame 24 based on various methods. For example, the bee access adjustment part 151 may be fastened by a sliding door method in which the bee access adjustment part 151 is fitted in grooves formed on both sides of the rear frame 24 and moved up and down or by a method in which a protruding portion is caught on a protrusion and depression portion.

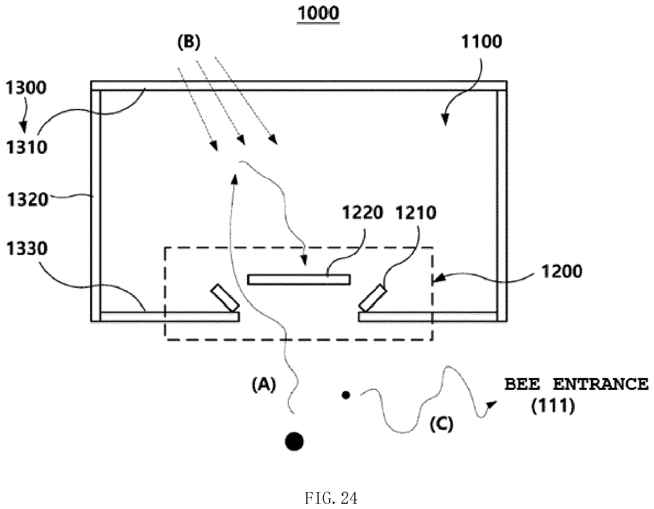

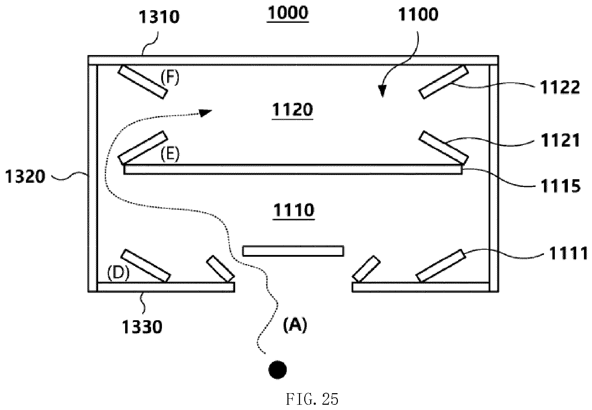

FIGS. 24 and 25 are sectional views illustrating a wasp catching device according to an embodiment of the present invention. Referring to FIG. 24, a wasp catching device 1000 includes a wasp catching part 1100, a wasp entrance part 1200, and a light-transmitting part 1300. The wasp catching device 1000 may capture wasps in the wasp catching part 1100 by using the upward flight (A) and light sensitivity (B) of wasps. In addition, the wasp catching device 1000 may form an open space for the free flight (C) of bees.

The wasp catching part 1100 may capture wasps having entered through the wasp entrance part 1200. The wasp entrance part 1200 may allow wasps, flying upward, to enter the wasp catching part 1100. The wasp entrance part 1200 may be located in a place where wasps can easily enter the wasp catching part 1100 when the wasps fly upward. For example, the wasp entrance part 1200 may be formed in the center of the lower portion of the wasp catching part 1100, as shown in FIG. 24. The wasp entrance part 1200 may be formed at both edges of the lower portion of the wasp catching part 1100.

The wasp entrance part 1200 may include first entry guide portions 1210 and a second entry guide portion 1220. As shown in FIG. 24, the first entry guide portions 1210 may be inclined at a predetermined angle from the center of the wasp entrance part 1200 toward both edges, and may be formed in a V-shape as a whole. The second entry guide portion 1220 may be positioned above the first entry guide portions 1210, and may be formed in the shape of a horizontal roof plate. An entry guide space may be formed between the first and second entry guide portions 1210 and 1220 so that wasps can easily enter the wasp catching part 1100. Meanwhile, the first and second entry guide portions 1210 and 1220 may guide wasps through an entry direction, and may serves to prevent escape by limiting the flight space of wasps and thus preventing the wasps, captured in the wasp catching part 1100, from exiting again.

The light-transmitting part 1300 is a surface surrounding the wasp catching part 1100, and may include a capture top portion 1310, capture side portions 1320, and a capture bottom portion 1330. The light-transmitting part 1300 may be made of a transparent or translucent material through which light can be desirably transmitted. Alternatively, the light-transmitting part 1300 may be formed of a mesh structure in which a plurality of holes is formed, and thus light may pass through the holes.

The capture top portion 1310 is the top surface of the wasp catching part 1100, and may serve as a kind of lid of the wasp catching device 1000. In other words, the wasps captured in the wasp catching part 1100 may be removed after opening the capture top portion 1310. The capture side portion 1320 may be composed of a plurality of surfaces according to the shape of the wasp catching device 1000. For example, when the wasp catching device 1000 has a square pillar shape, it may be composed of four surfaces. When it has a hexagonal column shape, it may be composed of six surfaces. The capture bottom portion 1330 is the bottom surface of the wasp catching part 1100, and may form the wasp entrance part 1200. In other words, the position or size of an entrance or the number of entrances in the wasp entrance part 1200 may be determined depending on the arrangement of the capture bottom portion 1330.

The wasp catching device 1000 shown in FIG. 24 may include a plurality of wasp catching parts. For example, referring to FIG. 25, the wasp catching device 1000 may include first and second wasp catching parts 1110 and 1120. The first and second wasp catching parts 1110 and 1120 may be separated by a catching part separation plate 1115. A wasp having entered the first wasp catching part 1110 may pass between the catching part separation plate 1115 and the capture side portion 1320, and may then enter the second wasp catching part 1120.

In addition, the wasp catching device 1000 may include a plurality of movement guides in the wasp catching part 1100. For example, referring to FIG. 25, first movement guides 1111 may be included in the first wasp catching part 1110, and second and third movement guides 1121 and 1122 may be included in the second wasp catching part 1120. The first to third movement guides 1111, 1121, and 1122 may be installed, one at each of the left and right capture side portions 1320. Since captured wasps have the habit of crawling on a floor, they are confined in spaces D and E under the first and second movement guides 1111 and 1121 or a space F over the third movement guide 1122.

Meanwhile, the entry guide portions 1210 and 1220, the capture part separation plate 1115, and the movement guides 1111, 1121, and 1122 in the wasp catching device 1000 may be made of a transparent or translucent material through which light can be easily transmitted. In addition, they have mesh structures in which a plurality of holes is formed, so that light can pass through the holes.

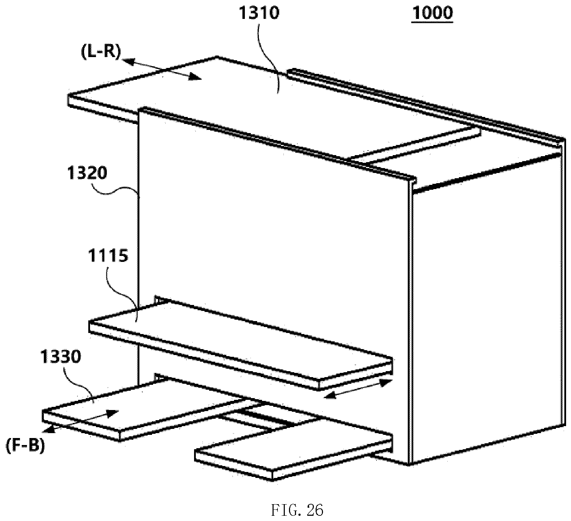

FIG. 26 is a perspective view illustrating the structure of the wasp catching device shown in FIG. 25 by way of example. Although the wasp catching device 1000 may have an integrated structure, it may have an assembled structure, as shown in FIG. 26.

When the wasp catching device 1000 has an assembled structure, cleaning may be convenient, and storage may be made easy by reducing the volume. Referring to FIG. 26, a wasp catching device 1000 may be separated into a capture top portion 1310, capture side portions 1320, a capture bottom portion 1330, and a catching part separation plate 1115. These are made of a transparent or translucent material through which light can pass, or are formed of mesh structures through which light can pass.

Meanwhile, in the wasp catching device 1000, the catch top portion 1310, the catch bottom portion 1330, and the catching part separation plate 1115 may be fastened in a slot manner in the state in which the catch side portions 1320 are fixed. The capture side portions 1320 may include a left-side portion, a right-side portion, a rear side portion, and a front side portion. For example, the capture top portion 1310 may move in left- and right-side portion directions (L-R). In the wasp catching device 1000, the wasps captured on the catching part separation plate 1115 may be removed by moving the capture top portion 1310 toward the left-side portion direction.

In the same manner, the capture bottom portion 1330 and the catching part separation plate 1115 may be moved in front side portion (not shown) and rear side portion direction (F-B). The capture bottom portion 1330 and the catching part separation plate 1115 may pass through the front side portion and the rear side portion and be fastened in a slot manner. The catching part separation plate 1115 may be removed from the wasp catching device 1000 by being moved in the front side portion direction. In the wasp catching device 1000, dead wasps may be removed by dropping them in a downward direction by pulling out the catching part separation plate 1115 in the front side direction.

In the wasp catching device 1000 of the present invention, entry guide portions 1210 and 1220 and movement guides 1111, 1121, and 1122 may also be assembled by various fastening methods in addition to the capture top portion 1310, the capture bottom portion 1330, and the catching part separation plate 1115. In addition, the wasp catching device 1000 may select and use a structure having one wasp catching part 1100 (see FIG. 24) and a structure having first and second wasp catching parts 1110 and 1120 (see FIG. 25) by using the catching part separation plate 1115.

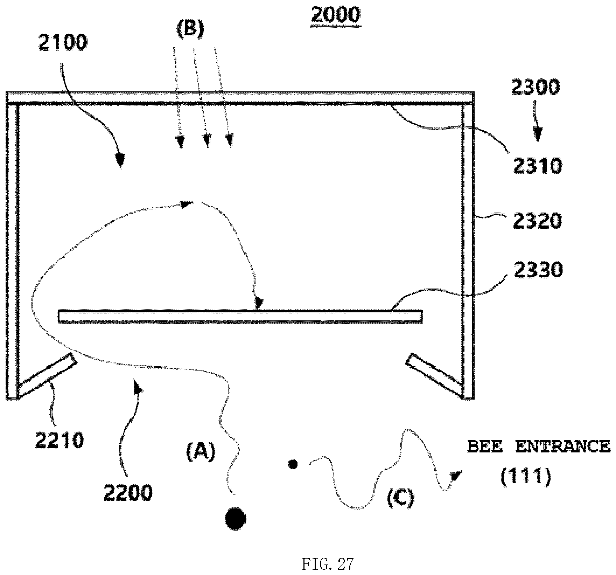

FIG. 27 is a sectional view illustrating a wasp catching device according to another embodiment of the present invention. Referring to FIG. 27, the wasp catching device 2000 includes a wasp catching part 2100, a wasp entrance part 2200, and a light-transmitting part 2300. The wasp catching device 2000 may capture wasps in the wasp catching part 2100 by using the upward flight (A) and light sensitivity (B) of wasps. In addition, the wasp catching device 2000 may provide an open space for the free flight (C) of bees.

The wasp catching part 2100 may capture wasps having entered through the wasp entrance part 2200. The wasp catching part 2200 may allow wasps, flying upward, to enter the wasp catching part 2100. The wasp entrance part 2200 may be formed at both edges of the lower portion of the wasp catching part 2100. The light-transmitting part 2300 may include a capture top portion 2310, capture side portions 2320, and a capture bottom portion 2330.

The wasp entrance part 2200 may be formed in the capture bottom portion 2330. The wasp entrance part 2200 may include entry guide portions 2210. The entry guide portions 2210 may be bent from both edges of the lower portions of the capture side portions 2320 in a center direction at a predetermined angle, and may form hook shapes. Accordingly, the entry guide portions 2210 may be formed in inverted V shapes (^ shapes) as a whole. Entry guide spaces may be formed between the entry guide portions 2210 and the capture bottom portion 2330 so that wasps can easily enter the wasp capture part 2100. Meanwhile, the entry guide portions 2210 and the capture bottom portion 2330 may serve to prevent escape so that the wasps captured in the wasp catching part 2100 cannot exit again.

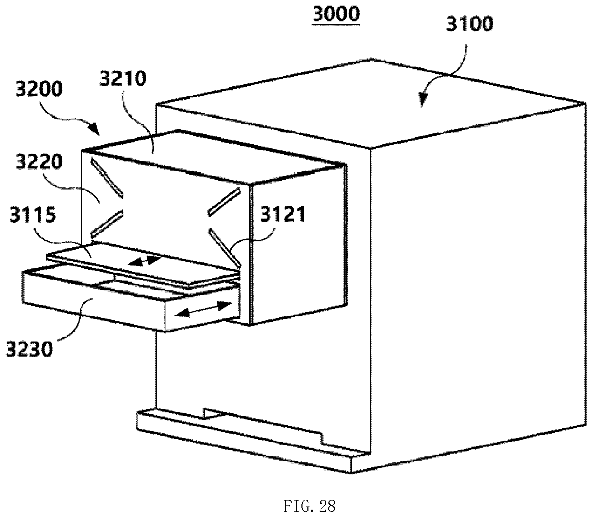

FIG. 28 is a perspective view showing a modified example of a wasp catching device according to an embodiment of the present invention. Referring to FIG. 28, a wasp catching system 3000 includes a beehive 3100 and a wasp catching device 3200. The wasp catching device 3200 includes a capture top portion 3210, capture side portions 3220, and a capture bottom portion 3230.

Slots for fastening movement guides 3121 such as those described in FIG. 25 in a slot manner may be formed in the capture side portion 3220. In addition, a slot for fastening a capture part separation plate 3115 may be formed in the capture side portion 3220. The capture part separation plate 3115 may be inserted and removed in the directions of the arrows through the slot. The capture bottom portion 3230 may have a drawer-type structure. When the capture bottom portion 3230 has a drawer-type structure, it may be inserted and removed in the directions of the arrows like a drawer.

When wasps are accumulated in the wasp catching device 3200, the light directed to an open space under the capture bottom portion 3230 may be blocked. In the wasp catching device 3200, captured wasps may be easily removed by pulling out the capture bottom portion 3230. In the wasp catching device 3200, the transmittance of the light directed toward the open space may be maintained and also the wasp catch rate may be prevented from dropping due to the blocking of light by easily removing the carcass wasp.

In the wasp catching device 3200, wasps may be removed through the capture top portion 3210. To remove wasps through the capture top portion 3210, the wasps need to be removed one by one or the overall wasp catching device 3200 needs to be turned over. However, in the wasp catching device 3200, the capture bottom portion 3230 is configured to be of a drawer type, so that captured wasps may be easily removed and a reduction in the wasp catch rate attributable to the blocking of light may be prevented.

Meanwhile, in the wasp catching device 3200, living wasps and dead wasps are present along with each other. When attempting to remove wasps from the wasp catching device 3200, a user may be attacked by a living wasp. Accordingly, it is not easy to remove wasps from the wasp catching device 3200. In the wasp catching device 3200 shown in FIG. 28, living wasps and dead wasps may be simply separated from each other using the capture part separation plate 3115, and the dead wasps may be easily removed through the capture bottom portion 3230.

First, the catching part separation plate 3115 and the capture bottom portion 3230 are inserted into the wasp catching device 3200. In this case, dead wasps are on the capture bottom portion 3115, and living wasps fly over the capture bottom portion 3115. Next, the catching part separation plate 3115 is drawn out and then inserted again. In this case, the dead wasps fall on the capture bottom portion 3230, and the living wasps remain in the space above the catching part separation plate 3115. Thereafter, the capture bottom portion 3230 is drawn out, the dead wasps are removed, and then the capture bottom portion 3230 is pushed back to an original state. In the wasp catching device 3200 shown in FIG. 28, living wasps and dead wasps may be simply separated from each other and the dead wasps may be easily removed through the above-described manner.

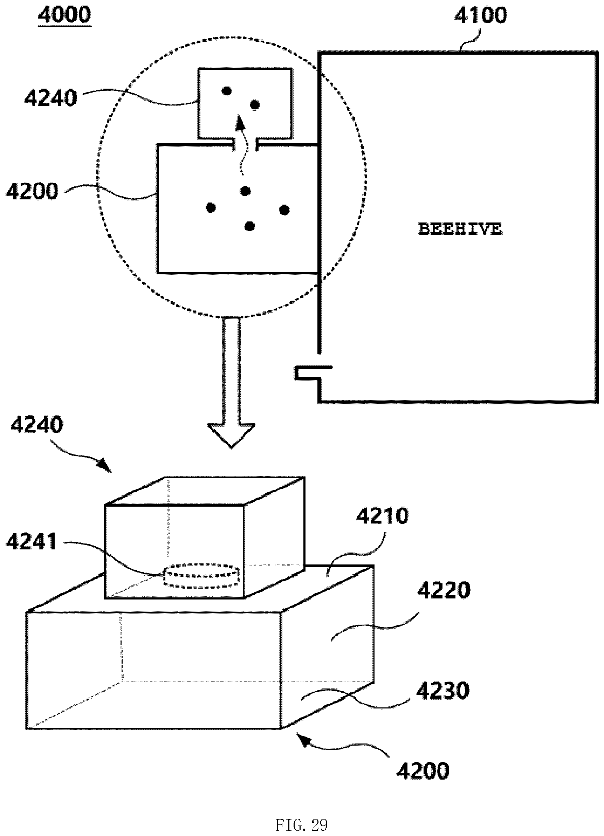

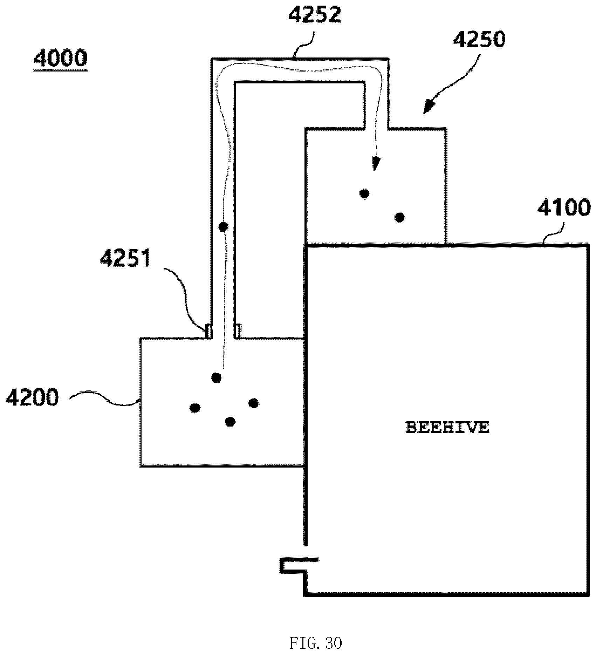

FIGS. 29 and 30 are perspective views showing another modified example of a wasp catching device according to an embodiment of the present invention. Referring to FIG. 29, a wasp catching system 4000 includes a beehive 4100 and a wasp catching device 4200. The wasp catching device 4200 includes a capture top portion 4210, capture side portions 4220, and a capture bottom portion 4230. The wasp catching device 4200 may further include a collection container 4240 that may be fastened through the capture top portion 4210.

In the wasp catching device 4200, the collection container 4240 may be connected in various ways such as bolting, a stopper, or a lid. The collection container 4240 may include a fastening portion 4241. In the collection container 4240, the fastening portion 4241 may be inserted into the capture top portion 4210. The wasps captured in the wasp catching device 4200 may enter the collection container 4240 through the fastening portion 4241. The wasp catching device 4240 may collect living wasps by using the collection container 4240.

Referring to FIG. 30, the wasp catching device 4200 may be connected to the collection container 4250 through a fastening portion 4251 and a connection pipe 4252. The fastening portion 4251 may connect the collection container 4250 to the wasp catching device 4200 in a manner such as bolt fastening or a stopper. The connection pipe 4252 may connect the wasp catching device 4200 and the collection container 4250. Wasps having the habit of flying upward may enter the collection container 4250 through the connection pipe 4252.

Since the wasp catching device 4200 of FIG. 30 uses the connection pipe 4252, the collection container 4250 may be installed on the beehive 4100. The wasp catching device 4200 may be easily installed because it is only necessary to place the collection container 4250 on the beehive 4100, and the entrance of the collection container 4250 may be directed upward, sideways, or downward. In addition, in the wasp catching device 4200, the collection container 4250 may be easily separated through the fastening portion 4251 without being attacked by a living wasp. In addition, in the wasp catching device 4200 of FIG. 30, liquor may be put in the collection container 4250 and wasp liquor may be easily made.

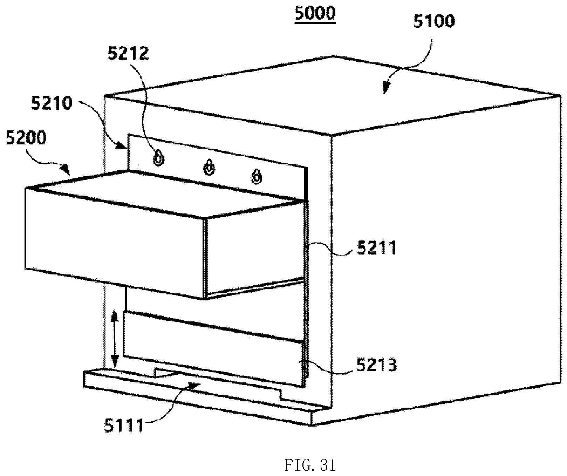

FIG. 31 is a perspective view showing another modified example of a wasp catching device according to an embodiment of the present invention. Referring to FIG. 31, a wasp catching system 5000 includes a beehive 5100 and a wasp catch ing device 5200. The wasp catching device 5200 includes an open space formation portion 5210. The open space formation portion 5210 may form an open space in which bees can freely move between the ground and the wasp catching device 5200.

For example, the open space formation portion 5210 may form an open space by fixing the wasp catching device 5200 to the entrance surface of the beehive at a predetermined height. The open space formation portion 5210 may include a rear side portion 5211 to fix the wasp catching device 5200 to a predetermined height. In this case, the rear side portion 5211 refers to a side portion in contact with the beehive 5100 among the capture side portions described above.

The rear side portion 5211 may be integrated with a beehive fixing portion 5212 for fixing the wasp catching device 5200 to the beehive 5100. The wasp catching device 5200 may be easily fixed by inserting the groove of the beehive fixing portion 5212 over the fixing means (e.g., a screw) of the beehive 5100. The height of the open space of the wasp catching device 5200 may be determined depending on a position in which the beehive fixing portion 5212 is fixed to the beehive 5100.

Continuously referring to FIG. 31, the rear side portion 5211 may be formed to extend in the direction of a bee entrance 5111. The portion of the rear side portion 5211 extending below a capture bottom portion may serve as a kind of support for stably fixing the wasp catching device 5200.

Meanwhile, a bee access adjustment part 5213 capable of adjusting the size of the bee entrance 5111 may be included at the lower end of the rear side portion 5211. The bee access adjustment part 5213 may move upward and downward along the rear side part 5211. The wasp catching device 5000 of the present invention may prevent wasps from entering the beehive 5100 by adjusting the size of the bee entrance. In addition, the wasp catching device 5000 may allow the bees to smoothly enter and exit the beehive 5100 without dropping pollen through the bee access adjustment part 5213.

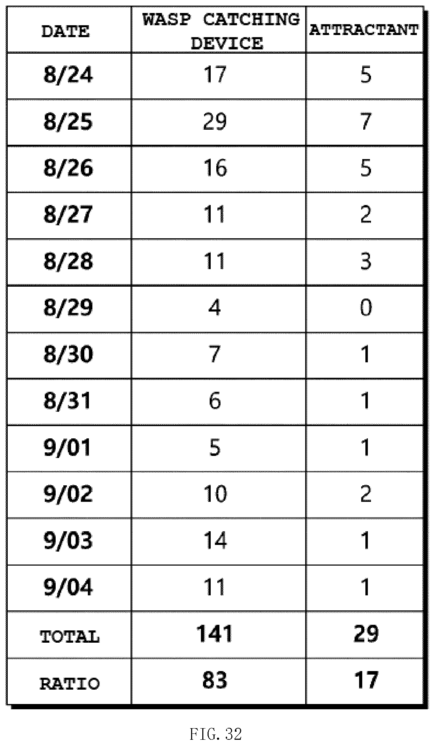

FIG. 32 is a table showing the results of wasp capture experiments with a wasp catching device according to an embodiment of the present invention. The wasp capture experiments of FIG. 32 had been conducted for 12 days from August 24, 2019 to September 4, 2019. The experiments of FIG. 32 were conducted in such a manner as to investigate the numbers of captured wasps using the wasp catching device of the present invention and a conventional attractant.

Referring to FIG. 32, the number of wasps captured in the wasp catching device of the present invention is 83% of the total number of captured wasps, and the number of wasps captured through the attractant is 17%. According to these experiments, it can be seen that the wasp catching device of the present invention can capture about five times more wasps than the case of using the conventional attractant.

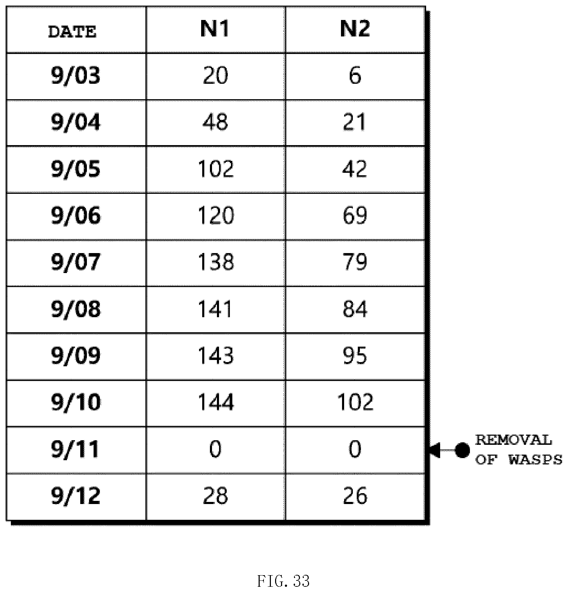

FIG. 33 is a table showing changes in the cumulative number of wasps captured attributable to the light of a wasp catching device according to an embodiment of the present invention. The wasp capture experiments of FIG. 33 had been conducted for 10 days from September 3, 2019 to September 12, 2019. The experiments of FIG. 33 were conducted in such a manner that the cumulative numbers of wasps captured in two wasp catching devices N1 and N2 were investigated from September 3, 2019 to September 10, 2019, all captured wasps were removed on September 11, 2019, and wasps were captured again on September 12, 2019.

Referring to FIG. 33, it can be seen that as the cumulative number of captured wasps increased, the number of captured wasps decreased. As for the wasp catching device N1, it can be seen that the number of captured wasps rarely increased during a period between September 7, 2019 and September 10, 2019 in which the cumulative number of captured wasps exceeded 130. The wasp catching device N2 showed similar results. In addition, all of the captured wasps were removed on September 11, 2019, and then the experiments were conducted again. As a result, a large number of wasps were captured again on September 12, 2019.

The experimental results of FIG. 33 show that the number of captured wasps may be reduced due to the light being covered by the carcasses of wasps accumulated in the wasp catching device. This indicates that wasps are sensitive to light. The wasp catching device according to the embodiment of the present invention shows that through the results of these experiments, the capture top portion, the capture side portions, and the capture bottom portion constituting the light-transmitting part are formed of a transparent or translucent material through which light is desirably transmitted, or a mesh structure through which light is desirably passed. In addition, in the wasp catching device of the present invention, the capture bottom portion may be configured to be of a drawer or slot type in order to prevent the carcasses of wasps from blocking light.

As described above, the wasp catching device according to an embodiment of the present invention may be fabricated by assembling the capture top portion, the capture side portions, and the capture bottom portion. In addition, the wasp catcher may be configured such that the beehive fixing portion is formed on the rear side portion in contact with a beehive or the front side portion opposite to the rear side portion. The wasp catching device may be stored in an overlapping state using the beehive fixing portion, or assembled individual components may be stored in a disassembled state.

The wasp catching device may be fixed to the beehive through the open space formation portion. When the wasp catching device is fixed, an open space may be formed under it. The wasp catching device may be formed of a transparent mesh structure to allow light to pass therethrough. Sunlight may pass through the wasp catching device, and may reach the open space. In addition, part of light may be reflected and guide wasps to the open space over a long distance.

Wasps flock to the open space having the bee entrance in order to hunt bees. Wasps have the habit of flying upward before catching bees. In addition, wasps are sensitive to light and fly upward toward the light. The wasp catching device lures wasps to the wasp entrance by using the habits of wasps, and captures wasps in the wasp catching part by using the various geometric structures (for example, the entry guides and the movement guides). Captured wasps may be removed through the catch top portion (in the case of a lid type) or through the catch bottom portion (in the case of a drawer type).

The wasp catching device according to an embodiment of the present invention may capture a large number of wasps without using an attractant, as shown in the experimental results. In addition, the wasp catching device of the present invention is made of a material that desirably transmits light therethrough or glitters by reflecting part of light and provides an open space in front of the bee entrance of the beehive, thereby increasing wasp catch rate attributable to the upward flight of wasps and also increasing honey production attributable to the free flight of bees.

The foregoing description is directed to specific examples for practicing the present invention. The present invention will include embodiments obtained by simple design changes or easy modifications in addition to the above-described embodiments. In addition, the present invention will also include techniques that can be easily modified and implemented using the embodiments. Therefore, the scope of the present invention should not be defined based on the above-described embodiments, but should be defined by not only claims to be described later but also equivalents to the claims.

## Claims

1. A wasp catching device installed on a beehive, the catching device comprising:
a capture chamber installed above a bee entrance of the beehive, formed of a mesh through which light is transmitted or a transparent or translucent material, and configured to capture wasps; and
a capture chamber entrance located in a lower portion of the capture chamber, and formed to attract wasps by means of light entering an inside of the capture chamber;
wherein a flight space for free flight of wasps and bees is provided below the capture chamber entrance by spacing the capture chamber apart from a ground by a predetermined distance; and
wherein the wasp catching device allows wasps having a habit of flying upward to fly upward and be attracted to the capture chamber entrance by means of light emitted from the inside of the capture chamber while flying in the flight space.

2. The wasp catching device of claim 1, further comprising an entry guide part configured to induce wasps to enter the capture chamber entrance and prevent the wasps having entered the capture chamber entrance from escaping.

3. The wasp catching device of claim 1, wherein a floor of the capture chamber is formed as a V-shaped floor, an inverted V-shaped floor, a four-side inclined floor, or a flat floor.

4. The wasp catching device of claim 3, wherein the capture chamber entrance is located in a side or center of the V-shaped floor, the inverted V-shaped floor, the four-side inclined floor, or the flat floor.

5. The wasp catching device of claim 1, wherein the floor of the capture chamber is separated from the capture chamber through a slot to remove carcasses of wasps in the capture chamber.

6. The wasp catching device of claim 1, wherein a top of the capture chamber comprises a lid portion configured to remove carcasses of wasps in the capture chamber.

7. The wasp catching device of claim 1, wherein
a top of the capture chamber further comprises a collection container connected through a collection container entrance, the collection container entrance provides a movement path of wasps, captured in the capture chamber, to the collection container, and the collection container comprises a collection container lid configured to seal the collection container entrance of the collection container when the collection container is separated from the capture chamber.

8. The wasp catching device of claim 1, wherein the capture chamber comprises a front frame, a left-side frame, a right-side frame, and a rear frame, and the individual frames are formed of a mesh through which light is transmitted or a transparent or translucent material.

9. The wasp catching device of claim 8, wherein the frames are folded to each other through hinges.

10. The wasp catching device of claim 8, further comprising a bee access adjustment part installed at a lower end of the rear frame and configured to adjust a size of the bee entrance.
